# EUROPÄISCHE PATENTANMELDUNG

(11) **EP 1 333 551 A2**
(43) Veröffentlichungstag der Anmeldung: **06.08.2003**
(21) Anmeldenummer: 03001455.9
(22) Anmeldetag: 22.01.2003
(51) Int. Cl.: H02G 3/18

(54) **Geräteeinsatz zur Elektroinstallation**

(30) Priorität: 04.02.2002 DE 10204413
(71) Anmelder: SIEMENS AKTIENGESELLSCHAFT, 80333 München (DE)
(72) Erfinder: Pump, Christian, 93348 Kirchdorf (DE)

(57) **Zusammenfassung**

Bei einem Geräteeinsatz (1) zur Elektroinstallation mit einem Gerätegehäuse (2) und mit mindestens einer verschwenkbaren Spreizkralle (3) ist zu deren Rückstellung ein mit dem Gehäuse (2) einstückig verbundener Gehäusebügel (5) mit einem am Krallenschenkel (3b) der Spreizkralle (3) anliegenden federelastischen Bügelschenkel (5b) vorgesehen.

## Beschreibung

Die Erfindung bezieht sich auf einen Geräteeinsatz zur Elektroinstallation, mit einem Gerätegehäuse und mit mindestens einer Spreizkralle, auf deren Krallenschenkel von außen ein Federelement wirkt.

Ein derartiger Geräteeinsatz bzw. -sockel oder Grundkörper bildet üblicherweise zusammen mit einem diesen haltenden Tragrahmen ein elektrisches Installationsgerät in Form beispielsweise einer Steckdose oder eines Schalters bzw. Tasters. Zur Unterputzmontage wird das Installationsgerät in eine Unterputzdose eingeführt und dort mittels Spreizkrallen gehalten, die an gegenüberliegenden Seiten des Installationsgerätes mittels Stellschrauben am Geräteeinsatz oder am Tragrahmen befestigt sind. Durch An- oder Festziehen der einen Halteschenkel der Spreizkralle endseitig durchsetzenden Stellschrauben werden die Spreizkrallen nach außen abgespreizt, so dass endseitig am Krallenschenkel vorgesehene Krallenspitzen in die Wandung der Unterputzdose eindringen und das Installationsgerät verankern.

Um ein Ausspreizen der Spreizkrallen bei gelösten Stellschrauben zu vermeiden und somit das Einsetzen des Installationsgerätes in die Unterputzdose zu erleichtern, ist ein außen oder innen an der Spreizkralle anliegendes und die diese mittels Federkraft gegen den Geräteeinsatz drückendes Federelement vorgesehen. Als solches sind z. B. aus DE 92 05 428 U1 eine an der dem Geräteeinsatz zugewandten Innenseite und aus der DE 38 23 117 C2 eine an der dem Geräteeinsatz abgewandten Außenseite anliegende Blattfeder als Rückstellvorrichtung für die jeweilige Spreizkralle eines elektrischen Installationsgerätes bekannt.

Nachteilig bei diesen bekannten Ausführungen ist jedoch, dass das Fügen der mit einem solchen Federelement verbundenen Spreizkrallen unter Vorspannung erfolgt, was die Handhabung sowohl beim Zusammenbau als auch beim Einbauen des Installationsgerätes erheblich erschwert.

Ein anderes Federelemente zu demselben Zweck in Form eines an der Spreizkralle anliegenden, stabförmigen und aus federndem Material bestehenden Körpers ist aus DE 93 17 385 U1 bekannt. Zwar ist bei dieser Ausführung das Fügen der entsprechenden Teile aufgrund der nur geringen Vorspannung des Federkörpers mit vergleichsweise geringem Aufwand möglich. Allerdings ist auch hier der Zusammenbau des aus gleich vielen Einzelteilen bestehenden Geräteeinsatzes unerwünscht aufwändig, so dass in der. Praxis häufig nach wie vor ein Gummiband zur Krallenrückstellung eingesetzt wird.

Der Erfindung liegt daher die Aufgabe zugrunde, einen Geräteeinsatz der eingangs genannten Art anzugeben, bei dem unter Vermeidung der genannten Nachteile eine einfache Gerätemontage bei gleichzeitig zuverlässiger selbsttätiger Rückstellung der Spreizkrallen zur Geräteinstallation realisiert ist.

Diese Aufgabe wird erfindungsgemäß gelöst durch die Merkmale des Anspruchs 1. Dazu ist ein mit dem Gehäuse einstückig verbundener Gehäusebügel mit einem am Krallenschenkel anliegenden federelastischen Bügelschenkel vorgesehen. Die einstückige oder einteilige Verbindung ist bei einem üblicherweise aus Kunststoff bestehenden Gehäuse zweckmäßigerweise durch Anspritzen des dann ebenfalls aus Kunststoff bestehenden laschenartigen Bügels an das Gerätegehäuse realisiert.

Der an das Gerätegehäuse angeformte, nachfolgend als Kunststoffbügel bezeichnete Gehäusebügel erstreckt sich über einen Teil der Gehäusehöhe und bildet mit dessen zur Gehäuseaußenwand beabstandeten federelastischen Bügelschenkel eine taschenartige Aufnahme für den Krallenschenkel. Die somit - bezogen auf die Gehäuseunterseite - sowohl oben als auch seitlich offene Aufnahme ermöglicht ein besonders einfaches Einstecken der Spreizkralle beim Gerätezusammenbau und bei der Gerätemontage.

In vorteilhafter Ausgestaltung ist der Bügelschenkel L-förmig. Dabei ist dieser über dessen kurzen L-Schenkel an das Gehäuse angeformt. Dadurch ist eine bruchfeste und damit zuverlässige Verbindung zwischen dem Kunststoffbügel und dem Gehäuse hergestellt. Der dann den federelastischen Bügelschenkel bildende lange L-Schenkel erstreckt sich - in Richtung zur Gehäuseunterseite verlaufend - zumindest bis zum Schenkelende des Krallenschenkels, zweckmäßigerweise jedoch über dessen endseitigen Krallen oder Krallenspitzen hinaus.

In einer bevorzugten Ausführungsform ist der federelastische Bügelschenkel des Kunststoffbügels konisch oder keilförmig ausgebildet. Dabei nimmt die Schenkeldicke des federelastischen Bügelschenkels des Gehäusebügels - ausgehend von dessen mit dem Gehäuse verbundenen Bügelabschnitt - zum Schenkelfreiende hin ab. Demzufolge erweitert sich der Zischen- oder Aufnahmeraum für den Krallenschenkel ausgehend vom am Gehäuse angeformten Bügelende des Kunststoffbügels zu dessen Freiende hin. Um das sich dadurch ergebende Spiel auszugleichen, ist im Bereich des Schenkelfreiendes des federelastischen Bügelschenkels an diesen eine in Richtung der Gehäusewandung weisende Klemmnase angeformt.

Die Bügelbreite des Kunststoffbügels sollte über dessen gesamter Bügellänge gleich oder konstant sein. Jedoch ist der Kunststoffbügel schmaler als der endseitig die Krallen- oder Krallenspitzen tragende Krallenschenkel der Spreizkralle und liegt mit dessen federelastischen Bügelschenkel zweckmäßigerweise mittig am Krallenschenkel an. Dadurch liegen die üblicherweise zwei Krallen bzw. Krallenspitzen auf gegenüber liegenden Seiten des Bügelschenkels in gleichem Abstand zum Kunststoffbügel.

Die Breite des Kunststoffbügels ist im Vergleich zur Breite des Krallenschenkels derart gewählt, dass ein ausreichendes Spiel sowohl zum einfachen Einsetzen der Spreizkralle zwischen den Kunststoffbügel und das Gehäuse beim Gerätezusammenbau als auch beim Verschwenken der Spreizkralle zur Krallenverankerung in einer Montagedose bei der Geräteinstallation sichergestellt ist.

Vorteilhafterweise ist eine horizontale, d.h. bezogen auf das Gehäuse tangentiale und quer zur Längsrichtung des Kunststoffbügels gerichtete Führung der Spreizkralle hergestellt, um ein Auslenken oder Verrutschen der Spreizkralle in der horizontalen Richtung zuverlässig zu vermeiden. Dazu sind im Bereich zwischen den Krallen des Krallenschenkels an den Bügelabschnitt vorzugsweise zwei Positioniernasen angeformt, die sich jeweils in Richtung der dieser jeweils zugewandten Kralle erstrecken.

In zweckmäßiger Weiterbildung ist an die oder jede Positioniernase ein Stützsteg angeformt. Die Positioniernase ist hierzu zweckmäßigerweise selbst derart stegartig ausgebildet, dass sich der Stützsteg in den Zwischenraum zwischen dem Gehäusebügel und der Gehäuseaußenwand erstreckt. Dadurch ist eine besonders zuverlässige und effektive horizontale Führung der jeweiligen Spreizkralle einerseits bei deren Anbau an den Geräteeinsatz und somit bei dessen Zusammenbau sowie andererseits beim Verschwenken des Krallenschenkels sowohl in Ausspreizrichtung als auch in entgegengesetzter Richtung erreicht. Die Spreizkralle ist somit in einer definierten und zumindest annähernd spielfreien Ausgangsposition lagefixiert.

Mit dem sich im Bereich zwischen den Krallenspitzen des Krallenschenkels zur Gehäuseaußenwand hin erstreckenden Stützsteg ist darüber hinaus ein zuverlässiger Anschlag für die Spreizkralle über das zur Ausbildung der Krallenspitzen üblicherweise bogen- oder halbkreisförmig ausgestanzte Schenkelende des Krallenschenkels ermöglicht. Der Stützsteg bildet zudem bei dessen stirnseitiger Anlage am Gehäuse bei unverspreizter Spreizkralle einen Anschlag für den federelastischen Bügelschenkel des Kunststoffbügels.

Die mit der Erfindung erzielten Vorteile bestehen insbesondere darin, dass mittels eines an einen Geräteeinsatz zur Elektroinstallation angeformten Gehäusebügel mit federelastischem Bügelschenkel einerseits eine zuverlässige Rückstellung einer zur Krallenbefestigung verschwenkbaren Spreizkralle gewährleistet ist. Andererseits ist die Anzahl der Einzelteile eines solchen Geräteeinsatzes zumindest um das für die Krallenrückführung üblicherweise vorgesehene, separate Federelement verringert, so dass insgesamt der Montageaufwand beim Fügen oder Zusammenbauen des Geräteeinsatzes des entsprechenden Installationsgerätes erheblich verringert ist.

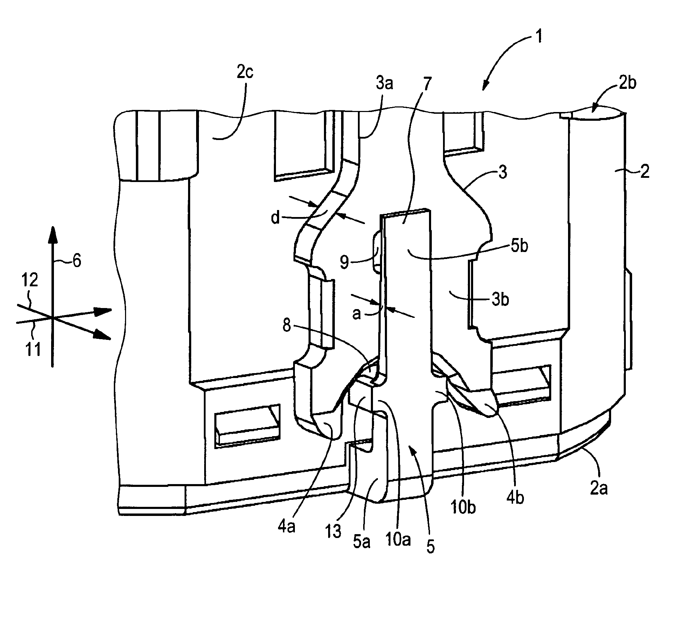

Nachfolgend wird ein Ausführungsbeispiel der Erfindung anhand einer Zeichnung näher erläutert. Darin zeigt die einzige Figur ausschnittsweise einen Geräteeinsatz mit angespritztem Kunststoffbügel als Rückstellfederelement einer Spreizkralle.

Die Figur zeigt ausschnittsweise einen Geräteeinsatz oder Gerätesockel 1 mit einem Gerätegehäuse 2 eines nicht näher dargestellten Installationsgerätes zur Elektroinstallation. Dieses umfasst gemäß beispielsweise der DE 93 17 385 U1 einen üblicherweise aus einem dünnen Blech ausgestanzten Tragrahmen, der zur Bereitstellung des Geräteeinsatzes 1 das Gehäuse 2 trägt. An dem Gerätegehäuse 2 - oder auch am Tragrahmen - ist eine Spreizkralle 3 mittels einer (nicht sichtbaren) Stellschraube gehalten.

Die Spreizkralle 3 weist einen sich an einen mit der Stellschraube zusammenwirkenden Halteschenkel 3a anschließenden und gegenüber diesem üblicherweise in einem stumpfen Winkel abgewinkelten Krallenschenkel 3b auf. Dieser wiederum trägt an dessen Schenkelfreiende zwei Krallen oder Krallenspitzen 4a und 4b. Die Krallen 4a und 4b sind vom Krallenschenkel 3b wiederum abgewinkelt und kragen vom Gerätegehäuse 2 weg nach außen aus.

Mit dem Gerätegehäuse 2 ist ein Gehäusebügel 5 einstückig verbunden. Dazu ist der vorzugsweise aus Kunststoff bestehende Gehäusebügel 5 an das ebenfalls aus Kunststoff bestehende Gerätegehäuse 2 angeformt. Bei der Herstellung wird dies dadurch bewerkstelligt, dass der nachfolgend als Kunststoffbügel bezeichnete Gehäusebügel 5 an das Gerätegehäuse 2 angespritzt wird.

Der Kunststoffbügel 5 ist L-förmig und umfasst einen durch den kurzen L-Schenkel gebildeten Bügelabschnitt 5a, über den der Kunststoffbügel 5 an das Gehäuse 2 angeformt ist. Ein mit dem stirnseitig an das Gehäuse 2 angeschlossenen Bügelabschnitt 5a einstückiger oder einteiliger und durch den langen L-Schenkel gebildeter Bügelschenkel 5b erstreckt sich - ausgehend vom der Gehäuseunterseite 2a zugewandten kurzen L-Schenkel 5a - in Gehäuselängsrichtung 6 zur Gehäuseoberseite 2b. Dabei verläuft der federelastische Bügelschenkel 5b beabstandet zur Gehäuseaußenwand 2c. Dieser Abstand ist dabei größer oder gleich der Dicke d des Krallenschenkels 3b der Spreizkralle 3.

Der federelastische Bügelschenkel 5b des Kunststoffbügels 5 ist konisch oder keilförmig ausgebildet. Dabei nimmt die Schenkeldicke a des federelastischen Bügelschenkels 5b des Gehäusebügels 5 - ausgehend von dessen mit dem Gehäuse 2 im Bereich dessen Gehäuseunterseite oder -boden 2a verbundenen Bügelabschnitt 5a - zum Schenkelfreiende 7 hin ab. Demzufolge erweitert sich der Zischen- oder Aufnahmeraum 8 für den Krallenschenkel 3b zwischen dem Bügelschenkel 5b und der Gehäuseaußenwand 2c in Gehäuselängsrichtung 6 zur Gehäuseoberseite 2b hin. Zur festen Anlage des Kunststoffbügels 5 am Krallenschenkel 3b ist im Bereich des Schenkelendes 7 des federelastischen Bügelschenkels 5b an diesen eine zur Gehäuseaußenwand 2c hin gerichtete Klemmnase 9 angeformt. Die Klemmnase 9 liegt am Krallenschenkel 3b an, wenn dieser im taschenartigen, sowohl oben als auch seitlich offenen Aufnahmeraum 8 einliegt. Dadurch wird das aufgrund der keilförmigen Gestalt des federelastischen Bügelschenkels 5b gegebene Spiel innerhalb des Zwischenraumes 8 ausgeglichen.

Der Krallenschenkel 3b erstreckt sich in Richtung der Gehäuseunterseite 2a zumindest annähernd bis zum durch den kurzen L-Schenkel gebildeten angeformten Bügelabschnitt 5a des Kunststoffbügels 5. Dementsprechend erstreckt sich der federelastische Bügelschenkel 5b in Richtung der Gehäuseunterseite 2a zumindest bis zum durch die Krallenspitzen 4a, 4b gebildeten Schenkelfreiende des Krallenschenkels 5b. Die Krallen 4a, 4b verlaufen dabei beabstandet und äquidistant zum Kunststoffbügel 5.

Um den zwischen der jeweiligen Kralle 4a, 4b und dem Kunststoffbügel 5 sich ergebenden Zwischenraum zumindest teilweise auszufüllen, sind im Bereich oberhalb des angeformten Bügelabschnitts 5a an den federelastischen Bügelschenkel 5b zwei Positioniernasen 10a bzw. 10b angeformt.

Die Positioniernasen 10a und 10b sind auf die jeweils zugewandte Kralle 4a bzw. 4b hin ausgerichtet. Diese quer zur Gehäuselängsrichtung 6 und tangential zur Gehäuseaußenwand 2c verlaufende Richtung wird nachfolgend als Horizontalrichtung 11 bezeichnet. Die zusätzlichen Positioniernasen 10a, 10b verringern das freie Spiel der Spreizkralle 3 und verhindern somit deren Verrutschen in der dargestellten Ausgangsposition, in der der Kunststoffbügel 5 infolge dessen Federkraft die Spreizkralle 3 über deren Krallenschenkel 3b gegen das Gerätegehäuse 2 drückt.

Der Kunststoffbügel 5 selbst verhindert somit ein unbeabsichtigtes Ausschwenken der Spreizkralle 3 - bezogen auf das Gerätegehäuse 2 - in Radialrichtung 12. Die zusätzlichen Positioniernasen 10a und 10b verhindern darüber hinaus ein Verrutschen oder Verkippen der Spreizkralle 3 in der quer zur Radialrichtung 12 und zur Gehäuselängsrichtung 6 verlaufenden Horizontalrichtung 11.

Im Bereich der Positioniernasen 10a, 10b ist an den federelastischen langen L-Schenkel 5b des Gehäusebügels 5 ein Stützsteg 13 angeformt. Dazu sind zweckmäßigerweise die Positioniernasen 10a und 10b selbst stegartig ausgebildet. Der jeweilige Stützsteg 13 erstreckt sich dabei in Radialrichtung 12 in den Zwischenraum 8 zwischen dem Gehäusebügel 5 und der Gehäuseaußenwand 2c hinein und liegt an dieser in der dargestellten unverspreizten Ausgangsposition der Spreizkralle 3 an. Der Stützsteg 13 übernimmt dabei eine Doppelfunktion, indem dieser als Anschlag sowohl für den federelastischen und daher verschwenkbaren Bügelschenkel 5b als auch für die Spreizkralle 3 dient. Die Spreizkralle 3 ist somit in dieser definierten und zumindest annähernd spielfreien Ausgangsposition lagefixiert.

Mit dem an das Gerätegehäuse 2 des beispielsweise als Steckdose oder Schalter ausgeführten Geräteeinsatzes 1 angeformten Gehäusebügel 5 ist einerseits eine vertikale Führung beim Einsetzen oder Montieren der Spreizkralle 3 erreicht. Andererseits ist mit den an den federelastischen Bügelschenkel 5b des Gehäusebügels 5 angeformten Positioniernasen 10a, 10b und mit den an diese wiederum angeformten Stützstegen 13 eine zuverlässige horizontale Führung der Spreizkralle 3 sowohl in deren Ausgangs- oder Lageposition als auch in deren bestimmungsgemäßer, zur Krallenbefestigung des Geräteeinsatzes 1 verschwenkter Einbauposition gegeben.

## Patentansprüche

1. Geräteeinsatz zur Elektroinstallation, mit einem Gerätegehäuse (2) und mit mindestens einer zur Krallenbefestigung verschwenkbaren Spreizkralle (3), auf deren Krallenschenkel (3b) von außen ein Federelement wirkt, **dadurch gekennzeichnet, dass** das Federelement ein mit dem Gehäuse (2) einstückig verbundener Gehäusebügel (5) ist, dessen federelastischer Bügelschenkel (5b) am Krallenschenkel (3b) anliegt.

2. Geräteeinsatz nach Anspruch 1, **dadurch gekennzeichnet, dass** der Gehäusebügel (5) an das Gehäuse (2) derart angeformt ist, dass der federelastische Bügelschenkel (5b) unter Bildung einer taschenartigen Aufnahme (9) für den Krallenschenkel (3b) beabstandet zur Gehäuseaußenwand (2c) verläuft.

3. Geräteeinsatz nach Anspruch 1 oder 2, **gekennzeichnet durch** einen L-förmigen Gehäusebügel (5), der mit dessen kurzem L-Schenkel (5a) stirnseitig an das Gehäuse (2) angeformt ist.

4. Geräteeinsatz nach einem der Ansprüche 1 bis 3, **dadurch gekennzeichnet, dass** sich der federelastische Bügelschenkel (5b) in Richtung der Gehäuseunterseite (2a) zumindest bis zum Schenkelfreiende des Krallenschenkels (5b) erstreckt.

5. Geräteeinsatz nach einem der Ansprüche 1 bis 4, **dadurch gekennzeichnet, dass** der Gehäusebügel (5) im Bereich dessen zwischen den Krallen (4a, 4b) des Krallenschenkels (3b) verlaufenden Bügelabschnitt (5a) mindestens eine an diesen angeformte Positioniernase (10a, 10b) aufweist, die sich in Richtung (11) der dieser zugewandten Kralle (4a bzw. 4b) erstreckt.

6. Geräteeinsatz nach einem der Ansprüche 1 bis 5, **dadurch gekennzeichnet, dass** an den federelastischen Bügelschenkel (5b) mindestens ein Stützsteg (13) angeformt ist, der sich in den Zwischenraum (8) zwischen dem Gehäusebügel (5) und dem Gerätegehäuse (2) erstreckt.

7. Geräteeinsatz nach Anspruch 6, **dadurch gekennzeichnet, dass** der Stützsteg (13) bei unverspreizter Spreizkralle (3) stirnseitig am Gehäuse (2) anliegt.

8. Geräteeinsatz nach einem der Ansprüche 1 bis 7, **dadurch gekennzeichnet, dass** die Schenkeldicke (a) des federelastischen Bügelschenkels (5b) des Gehäusebügels (5) ausgehend von dessen mit dem Gehäuse (2) verbundenen Bügelabschnitt (5a) zum Schenkelfreiende (7) hin abnimmt.

9. Geräteeinsatz nach einem der Ansprüche 1 bis 8, **dadurch gekennzeichnet, dass** der federelastische Bügelschenkel (5b) des Gehäusebügels (5) freiendseitig eine sich in Richtung des Gehäuses (2) erstreckende Klemmnase (8) aufweist.

10. Installationsgerät, insbesondere Steckdose, Schalter oder Taster zur Unterputzmontage, mit einem Geräteeinsatz (1) nach einem der Ansprüche 1 bis 9.
